# EUROPÄISCHE PATENTANMELDUNG

(11) **EP 4 371 740 A1**
(43) Veröffentlichungstag der Anmeldung: **22.05.2024**
(21) Anmeldenummer: 22208140.8
(22) Anmeldetag: 17.11.2022
(51) Int. Cl.: B29C 65/16, G01J 5/0821

(54) **PYROMETERVORRICHTUNG ZUR TEMPERATURBESTIMMUMG BEIM LASERKUNSTSTOFFSCHWEISSEN UND SYSTEM ZUM LASERKUNSTSTOFFSCHWEISSEN**

(71) Anmelder: Leister Technologies AG, 6056 Kägiswil (CH)
(72) Erfinder: Franke, Alexander, 6064 Kerns (CH); Csati, Daniel, 6056 Kägiswil (CH)
(74) Vertreter: Witte, Weller & Partner Patentanwälte mbB

(57) **Zusammenfassung**

Die vorliegende Erfindung betrifft eine Pyrometervorrichtung (60) zur Temperaturbestimmung beim Laserkunststoffschweißen, wobei die Pyrometervorrichtung folgendes aufweist: einen ersten Faseranschluss (61) für eine erste Lichtleitfaser (31); einen zweiten Faseranschluss (62) für eine zweite Lichtleitfaser (32); und einen Strahlungstemperatursensor (63); wobei die Pyrometervorrichtung (60) dazu eingerichtet ist, über den ersten Faseranschluss (61) empfangene Prozesslaserstrahlung (71) an den zweiten Faseranschluss (62) weiterzuleiten und über den zweiten Faseranschluss (62) auszugeben; wobei die Pyrometervorrichtung (60) dazu eingerichtet ist, über den zweiten Faseranschluss (62) empfangene Wärmestrahlung (72) an den Strahlungstemperatursensor (63) weiterzuleiten. Die vorliegende Erfindung betrifft ferner ein System (200) zum Laserkunststoffschwei-ßen mit einer Laser-Strahlquelle (20), einer Prozessoptik (40) und einer fasergekoppelten Pyrometervorrichtung (60).

## Beschreibung

Die vorliegende Erfindung betrifft eine Pyrometervorrichtung zur Temperaturbestimmung beim Laserkunststoffschweißen. Die vorliegende Erfindung betrifft ferner ein System zum Laserkunststoffschweißen mit einer Laser-Strahlquelle, einer Prozessoptik zum Laserkunststoffschweißen und einer Pyrometervorrichtung zur Temperaturbestimmung beim Laserkunststoffschweißen.

Systeme zum Schweißen von Kunststoffen, insbesondere von thermoplastischen Kunststoffen, mittels Heißluft und mittels Laserstrahlung sind aus dem Stand der Technik grundsätzlich bekannt. Beim Laserschweißen thermoplastischer Kunststoffe werden üblicherweise ein für die Laserstrahlung transparenter mit einem absorbierenden Fügepartner gefügt. Der Laserstrahl durchdringt den transparenten Kunststoff, in Fachsprache Fügepartner, und trifft auf den absorbierenden Kunststoff. Dort wird die Energie der Strahlung in Wärme umgewandelt und der Kunststoff schmilzt. Bei Kontakt mit dem transparenten Kunststoff schmilzt dieser aufgrund der Wärmeleitung ebenfalls und verbindet sich mit dem absorbierenden Kunststoff. Sobald beide Kunststoffe erkaltet sind, entsteht eine stoffschlüssige Verbindung.

EP 1 366 890 A1 offenbart ein Verfahren und eine Vorrichtung zum Verbinden von Kunststoffmaterialien mit hoher Schweißgeschwindigkeit. Es werden ein Verfahren und Vorrichtung zum Verbinden von endlosen Kunststoffmaterialien mittels der Durchstrahltechnik beschrieben. Zum Verbinden werden die Endlosmaterialien durch zwei gegenläufige gegeneinander pressende Rollen geführt. Die erste Rolle besteht aus einem laserstrahldurchlässigen Material und ist rohrförmig ausgebildet. Die zweite Rolle ist aus einem an der Oberfläche leicht deformierbaren Material ausgebildet, so dass sich deren Oberfläche an die Form der ersten Rolle anpassen kann. In der ersten Rolle sind Einrichtungen zur Erzeugung eines Laserstrahls an der Kontaktfläche zwischen den zu verbindenden Materialien angeordnet. Der Strahl wird dabei als linienförmiger Laserstrahl längs zur Bewegungsrichtung der Materialien ausgebildet, so dass beim Durchlauf eine kontinuierliche Erwärmung des Materials bis zum Schmelzpunkt erfolgt, ohne dass eine übermäßig hohe Laserleistung zur Verfügung gestellt werden muss. Mittels des Verfahrens und der Vorrichtung ist eine kontinuierliche Verbindung bei hoher Geschwindigkeit möglich. Für die Temperaturmessung kann ein Pyrometer zur IR-Messung der Temperatur vorgesehen werden. Durch diese Messung kann die Schmelzzone beobachtet und die Laserleistung entsprechend geregelt werden. Die Einrichtung zur IR-Messung ist vorzugsweise in der ersten Rolle, mithin innerhalb des Prozesskopfs angeordnet.

EP 3 181 331 A1 offenbart ein Verfahren und eine Vorrichtung zum Verbinden von wenigstens zwei sich dreidimensional erstreckenden Werkstücken mittels Laserdurchstrahlschweißen, wobei die Werkstücke mit einer Spannvorrichtung in einem Verbindungsbereich lokal aneinandergepresst werden. Es ist vorgesehen, dass der Verbindungsbereich jeweils in wenigstens zwei aneinander angrenzende Verbindungsbereichssegmente unterteilt wird, die gleichzeitig jeweils von einem Laserstrahl simultan oder quasisimultan mit einem unterschiedlichen Einfallswinkel beaufschlagt werden. Bei einer bevorzugten Ausführungsform des Verfahrens wird die von den Laserstrahlen auf die Werkstücke übertragene Energie geregelt. Dazu wird vorzugsweise die Temperatur im Verbindungsbereich der Werkstücke kontaktlos erfasst, beispielsweise mit einem Pyrometer, und die Energieeinbringung in die jeweiligen Verbindungsbereichssegmente abhängig von der erfassten Temperatur geändert, indem vorzugsweise die Bewegungsgeschwindigkeit des Laserstrahls entsprechend vergrößert oder verkleinert wird.

EP 1 405 713 B1 offenbart ein Verfahren zum Verbinden von Werkstücken aus Kunststoff, wobei das obere, einer Laserquelle zugewandte Werkstück aus einem für den Laserstrahl transparenten Material und das untere Werkstück aus einem für den Laserstrahl absorbierendem Material besteht, so dass die aneinander grenzenden Kontaktflächen der beiden Werkstücke aufschmelzen und bei der anschließenden Abkühlung unter Druck sich miteinander verbinden, wobei das Lenken des Laserstrahls auf die zu verbindende Stelle und das mechanische Zusammendrücken der Werkstücke gleichzeitig durch einen Bearbeitungskopf durchgeführt wird. Im Bearbeitungskopf kann ein integrierter Strahlteiler vorgesehen sein, mit welchem von der Schweißstelle ausgehende Wärmestrahlung zu einem Temperaturmessgerät abgelenkt wird.

Vor diesem Hintergrund ist es eine Aufgabe der vorliegenden Offenbarung, ein verbessertes System zum Laserkunststoffschweißen und eine Pyrometervorrichtung zur Temperaturbestimmung beim Laserkunststoffschweißen und bereitzustellen. Es wäre wünschenswert, Gewicht und Größe eines Prozesskopfs gering zu halten. Auch wäre es wünschenswert, die Prozessgenauigkeit auch bei Bestandsanlagen weiter zu verbessern. Ferner wäre es wünschenswert, eine Justage zu erleichtern und/oder einen Installationsaufwand zu reduzieren.

Gemäß einem ersten Aspekt der vorliegenden Offenbarung wird eine Pyrometervorrichtung zur Temperaturbestimmung beim Laserkunststoffschweißen vorgeschlagen, wobei die Pyrometervorrichtung folgendes aufweist: einen ersten Faseranschluss für eine erste Lichtleitfaser; einen zweiten Faseranschluss für eine zweite Lichtleitfaser; und einen Strahlungstemperatursensor; wobei die Pyrometervorrichtung dazu eingerichtet ist, über den ersten Faseranschluss empfangene Prozesslaserstrahlung an den zweiten Faseranschluss weiterzuleiten und über den zweiten Faseranschluss auszugeben; und wobei die Pyrometervorrichtung dazu eingerichtet ist, über den zweiten Faseranschluss empfangene Wärmestrahlung an den Strahlungstemperatursensor weiterzuleiten.

Gemäß einem weiteren Aspekt der vorliegenden Offenbarung wird ein System zum Laserkunststoffschweißen vorgeschlagen, wobei das System folgendes aufweist: eine Laser-Strahlquelle; eine Prozessoptik zum Laserkunststoffschweißen; und eine Pyrometervorrichtung zur Temperaturbestimmung beim Laserkunststoffschweißen, insbesondere wie vorstehend beschrieben; wobei die Laser-Strahlquelle über eine erste Lichtleitfaser mit dem ersten Faseranschluss der Pyrometervorrichtung verbunden ist; und wobei die Prozessoptik über eine zweite Lichtleitfaser mit dem zweiten Faseranschluss der Pyrometervorrichtung verbunden ist.

Bei der Lösung gemäß einem Aspekt der vorliegenden Erfindung wird demnach für das Laserkunststoffschweißen eine neuartige Ausgestaltung und Anordnung einer Pyrometervorrichtung zur Temperaturbestimmung vorgeschlagen, wobei eine beidseits fasergekoppelte Pyrometervorrichtung als eingefügtes Modul zwischen einer fasergekoppelten Laser-Strahlquelle für Prozesslaserstrahlung am ersten Faseranschluss und einem fasergekoppelten Prozesskopf am zweiten Faseranschluss eingefügt werden kann. Die Pyrometervorrichtung kann in einem eigenen Gehäuse in eine Faserstrecke zwischen der fasergekoppelter Laser-Strahlquelle und dem fasergekoppeltem Prozesskopf (auch als Prozessoptik bezeichnet) eingefügt werden. Sprich, aus der Laser-Strahlquelle kommt eine Lichtleitfaser, diese führt in die vorgeschlagene Pyrometervorrichtung, aus der Pyrometervorrichtung kommt eine zweite Lichtleitfaser, diese kann wiederum zu einer Prozessoptik führen, welche Strahlung aus der zweiten Lichtleitfaser auf das Werkstück zum Schweißen abbilden kann. Die Prozesslaserstrahlung geht demnach erst durch die erste Lichtleitfaser und dann durch die zweite Lichtleitfaser in Richtung Werkstück. Die Wärmestrahlung vom Werkstück gelangt hingegen in umgekehrter Richtung durch die zweite Lichtleitfaser zum Strahlungstemperatursensor (auch als Pyrometer bezeichnet) der Pyrometervorrichtung .

Die Erfinder haben erkannt, dass der bisherige Stand der Technik im Gebiet des Laserkunststoffschweißens demgegenüber andere Ansätze offenbart. Zur Prozessüberwachung kann demnach einerseits ein separates Pyrometer eingesetzt werden, welches sich nicht im Strahlungspfad der Prozesslaserstrahlung befindet. Andererseits kann bei herkömmlichen Lösungen eine Prozessoptik mit einem in die Prozessoptik integriertem Pyrometer zum Einsatz kommen.

Die Erfinder haben jedoch erkannt, dass die Lösung gemäß Aspekten der vorliegenden Erfindung demgegenüber einige Vorteile bieten kann. Da der Strahlungstemperatursensor nicht in der Prozessoptik (im Prozesskopf) angeordnet ist, kann die Prozessoptik besonders leicht und/oder klein ausgeführt werden. Dies kann beispielsweise schnelle Bewegungen der Prozessoptik mit einem Roboter ermöglichen. Ein weiterer Vorteil kann darin bestehen, dass zur Führung der dadurch leichteren Prozessoptik ein Roboterarm mit geringerer Tragfähigkeit eingesetzt werden kann. Ein weiterer Vorteil kann darin bestehen, dass in der Prozessoptik keine elektronischen Bauteile enthalten sein müssen. Dies kann die Verträglichkeit gegenüber elektromagnetischer Strahlung bzw. die EMV verbessern. Ein weiterer Vorteil kann darin bestehen, dass die Pyrometervorrichtung beabstandet von der Prozessoptik angeordnet sein kann. Insbesondere kann die Pyrometervorrichtung fest an einer Stelle montiert sein, mit Abstand von der Prozessoptik, frei von möglichen Bewegungen, Vibrationen und/oder elektromagnetischer Feldbelastung.

Ein weiterer Vorteil kann darin bestehen, die Prozessgenauigkeit auch nachträglich bei Bestandsanlagen weiter verbessert werden kann. Beispielsweise können bestehende Laserschweißanlagen, die bisher kein Pyrometer haben, nachträglich aufgewertet werden. Hierfür kann die vorgeschlagenen Pyrometervorrichtung in eine Faserstrecke zwischen einer bestehenden (Laser-)Strahlquelle für Prozesslaserstrahlung und einer bestehenden Prozessoptik eingefügt werden. Die Strahlquelle wird hierbei mit einer ersten Lichtleitfaser am ersten Faseranschluss angeschlossen. Die Prozessoptik wird mit einer zweiten Lichtleitfaser am zweiten Faseranschluss angeschlossen. Die Pyrometervorrichtung ist dazu eingerichtet, die über den ersten Faseranschluss empfangene Prozesslaserstrahlung an den zweiten Faseranschluss weiterzuleiten und über den zweiten Faseranschluss auszugeben, sodass die Prozesslaserstrahlung über die Prozessoptik dem Werkstück zugeführt werden kann. Vom Werkstück ausgehende Wärmestrahlung gelangt in umgekehrter Richtung über die Prozessoptik in die zweite Lichtleitfaser. Die Pyrometervorrichtung ist dazu eingerichtet, über den zweiten Faseranschluss empfangene Wärmestrahlung an den Strahlungstemperatursensor weiterzuleiten. Ein Vorteil der vorgeschlagenen Lösung kann auch darin bestehen, dass flexibel unterschiedliche Prozessoptiken zum Einsatz kommen können. Es ist demnach nicht erforderlich jeweils eine Prozessoptik mit jeweils integriertem Pyrometer bereitzustellen. Stattdessen kann die vorgeschlagene fasergekoppelte Pyrometervorrichtung mit verschiedenen Prozessoptiken ohne integrierte Pyrometer zum Einsatz kommen. Dadurch können die Systemkosten bei Einsatz verschiedener Prozessoptiken weiter reduziert werden. Insbesondere können bestehende Prozessoptiken weiter eingesetzt und nachträglich durch die vorgeschlagenen Pyrometervorrichtung aufgewertet werden.

Der erste und/oder zweite Faseranschluss kann beispielsweise ein IPG-Kollimator-Anschluss oder SMA-Anschluss sein. Im Rahmen der vorliegenden Offenbarung kann sich ein SMA-Anschluss auf einen F-SMA Anschluss nach IEC 61754-22 beziehen. Der erste Faseranschluss kann beispielsweise ein IPG-Kollimator-Anschluss sein. Der zweite Faseranschluss kann beispielsweise ein F-SMA-Anschluss nach IEC 61754-22 sein. Unter dem Begriff Faseranschluss kann im Rahmen der vorliegenden Offenbarung ein Anschluss für eine Lichtleitfaser (optisch leitende Faser, Lichtwellenleiter bzw. Lichtleitkabel) wie beispielsweise eine Glasfaser oder eine lichtleitende Kunststofffaser verwendet werden. Unter einer Prozessoptik kann im Rahmen der vorliegenden Offenbarung ein Prozesskopf verstanden werden, mit welchem einem Werkstück die Prozessstrahlung zum Laserkunststoffschweißen zugeführt wird. Insbesondere kann der Prozesskopf einen Faseranschluss für die zweite Lichtleitfaser aufweisen. Der Prozesskopf kann ferner ein oder mehrere strahlformende Elemente, wie Linsen, DOEs (diffraktive optische Elemente), etc. aufweisen.

Die Pyrometervorrichtung kann dazu eingerichtet sein, über den ersten Faseranschluss von einer externen Strahlquelle bereitgestellte Prozesslaserstrahlung zu empfangen, an den zweiten Faseranschluss weiterzuleiten und über den zweiten Faseranschluss auszugeben. Die Pyrometervorrichtung kann dazu eingerichtet sein, über den zweiten Faseranschluss von einer externen Prozessoptik empfangene Wärmestrahlung an den Strahlungstemperatursensor weiterzuleiten.

Mit anderen Worten wird die Prozesslaserstrahlung von einer externen Laser-Strahlquelle bereitgestellt. Die verwendete Laser-Strahlquelle kann beispielsweise ein fasergekoppelter Diodenlaser oder ein Faserlaser sein. Die Laserstrahlung wird über die erste Lichtleitfaser am ersten Faseranschluss bereitgestellt. Die Prozessoptik kann wiederum über die zweite Lichtleitfaser am zweiten Faseranschluss angeschlossen werden. Über die Prozessoptik wird die Prozesslaserstrahlung dem Werkstück zugeführt, beispielsweise im Freistrahl auf das Werkstück fokussiert. Die Wärmestrahlung kann in umgekehrter Richtung von der externen Prozessoptik empfangen und über die zweite Lichtleitfaser und den zweiten Faseranschluss an den Strahlungstemperatursensor weitergeleitet werden.

Die Pyrometervorrichtung kann einen teildurchlässigen Spiegel aufweisen. Der teildurchlässige Spiegel kann derart angeordnet und dazu eingerichtet sein, die Laser-Prozessstrahlung vom ersten Faseranschluss an den zweiten Faseranschluss weiterzuleiten. Der teildurchlässige Spiegel kann derart angeordnet und dazu eingerichtet sein, die über den zweiten Faseranschluss empfangene Wärmestrahlung an den Strahlungstemperatursensor weiterzuleiten. Hierbei kann entweder die Wärmestrahlung oder die Prozesslaserstrahlung umgeleitet werden. Mit anderen Worten kann teildurchlässige Spiegel durchlässig sein für die Wärmestrahlung und die Prozesslaserstrahlung umlenken. Alternativ kann der teildurchlässige Spiegel durchlässig sein für die Prozesslaserstrahlung und die Wärmestrahlung umlenken.

In einer Weiterbildung können der erste Faseranschluss, der zweite Faseranschluss, der teildurchlässige Spiegel und der Strahlungstemperatursensor derart angeordnet und dazu eingerichtet sind, dass der teildurchlässige Spiegel die Laser-Prozessstrahlung reflektiert und vom ersten Faseranschluss an den zweiten Faseranschluss umlenkt; und der teildurchlässige Spiegel die über den zweiten Faseranschluss empfangene Wärmestrahlung passieren lässt und an den Strahlungstemperatursensor weiterleitet. In diesem Beispiel wird also ein teildurchlässiger Spiegel eingesetzt, welcher die Laserstrahlung reflektiert, und die Wärmestrahlung durchlässt.

Die Pyrometervorrichtung kann eine erste Justageeinrichtung aufweisen, die dazu eingerichtet ist, eine optische Kopplung zwischen dem ersten Faseranschluss und dem zweiten Faseranschluss zu justieren (bzw. zu optimieren). Die erste Justageeinrichtung kann beispielsweise dazu eingerichtet sein, eine Position des ersten Faseranschlusses relativ zum zweiten Faseranschluss zu verschieben und/oder einen Eintrittswinkel zu ändern. Die erste Justageeinrichtung kann jedoch auch dazu eingerichtet sein, ein optisches Element wie beispielsweise eine Fokussierlinse für den zweiten Faseranschluss relativ zu diesem zu justieren. Die erste Justageeinrichtung kann auch dazu eingerichtet sein, den teildurchlässigen Spiegel zu justieren, um darüber eine optische Kopplung zwischen dem ersten Faseranschluss und dem zweiten Faseranschluss einzustellen. Ein Vorteil dieser Ausgestaltung kann in einer einfachen, flexiblen und/oder präzisen Montage bestehen.

Alternativ oder zusätzlich kann die Pyrometervorrichtung eine zweite Justageeinrichtung aufweisen, die dazu eingerichtet ist, eine optische Kopplung zwischen dem zweiten Faseranschluss und dem Strahlungstemperatursensor zu justieren (bzw. optimieren). Die zweite Justageeinrichtung kann beispielsweise dazu eingerichtet sein, eine Position des zweiten Faseranschlusses relativ zum Strahlungstemperatursensor zu verschieben und/oder einen Eintritts- bzw. Auftreffens-Winkel zu ändern. Insbesondere kann die zweite Justageeinrichtung dazu eingerichtet sein, eine Position des Strahlungstemperatursensors zu justieren. Die zweite Justageeinrichtung kann jedoch auch dazu eingerichtet sein, ein optisches Element wie beispielsweise eine Fokussierlinse für den zweiten Faseranschluss relativ zu diesem zu justieren. Die zweite Justageeinrichtung kann auch dazu eingerichtet sein, den teildurchlässigen Spiegel zu justieren, um darüber eine optische Kopplung zwischen dem Strahlungstemperatursensor und dem zweiten Faseranschluss einzustellen. Ein Vorteil dieser Ausgestaltung kann in einer einfachen, flexiblen und/oder präzisen Montage bestehen.

Die Prozesslaserstrahlung kann eine Wellenlänge im Bereich von 900 nm bis 1.100 nm aufweisen. Die Wärmestrahlung kann eine Wellenlänge im Bereich von 1.700 nm bis 2.300 nm aufweisen. Die Prozesslaserstrahlung kann inmitten oder am Rand eines auswertbaren Spektrums des Strahlungstemperatursensors liegen. Ein Vorteil dieser Ausgestaltung kann darin bestehen, dass eine Lichtleitfaser, insbesondere eine Glasfaser, in beiden Wellenlängenbereichen hinreichend transparent ist. Die Prozesslaserstrahlung ist beispielsweise im Bereich von 1 µm Wellenlänge angesiedelt. Die Transmission der meisten optisch durchsichtigen Kunststoffen nimmt oberhalb von 2,3 µm Wellenlänge oftmals massiv ab. Es kann somit einerseits ein vorteilhafter Energieeintrag mit der Prozesslaserstrahlung erreicht werden und andererseits eine Prozessüberwachung durch Wärmestrahlung in einem Wellenlängenbereich erfolgen, welcher auf dem Rückweg ebenfalls von der zweiten Lichtleitfaser transportiert werden kann.

Vor dem Strahlungstemperatursensor der Pyrometervorrichtung kann optional ein spektraler Filter angeordnet sein, der dazu eingerichtet ist, die Prozesslaserstrahlung zu blocken. Ein Vorteil dieser Ausgestaltung kann darin bestehen, dass die Messgenauigkeit weiter verbessert werden kann. Ferner kann der Strahlungstemperatursensor vor der Prozesslaserstrahlung geschützt werden. Insbesondere da die Wärmestrahlung über den zweiten Faseranschluss empfangen wird, über welchen auch die Prozesslaserstrahlung zum Werkstück gelangt, kann somit vermieden werden, dass ein zu hoher Anteil an Prozesslaserstrahlung auf den Strahlungstemperatursensor trifft.

Die Pyrometervorrichtung kann eine erste Lichtleitfaser aufweisen, welche mit dem ersten Faseranschluss verbunden ist. Die Pyrometervorrichtung kann eine zweite Lichtleitfaser aufweisen, welche mit dem zweiten Faseranschluss verbunden ist. Mit anderen Worten können die erste Lichtleitfaser und/oder die zweite Lichtleitfaser Teil der Pyrometervorrichtung sein. Ein Vorteil dieser Ausgestaltung kann darin bestehen, dass eine korrekte Kopplung und/oder Justage derart, dass über den ersten Faseranschluss empfangene Prozesslaserstrahlung an den zweiten Faseranschluss weitergeleitet und über den zweiten Faseranschluss ausgegeben wird; und/oder derart, dass über den zweiten Faseranschluss empfangene Wärmestrahlung an den Strahlungstemperatursensor weitergeleitet wird, bereits vorab, insbesondere vor Auslieferung an Kunden erfolgen können. Für den Einsatz müsste lediglich noch die Laser-Strahlquelle an der ersten Lichtleitfaser angeschlossen werden und die Prozessoptik an der zweiten Lichtleitfaser angeschlossen werden.

Die zweite Lichtleitfaser kann einen größeren Kemdurchmesser als die erste Lichtleitfaser aufweisen. Ein Kerndurchmesser der zweiten Lichtleitfaser zur Prozessoptik ist also vorzugsweise größer als der Kerndurchmesser der Lichtleitfaser zur Laserstrahlquelle. Beispielsweise kann die erste Lichtleitfaser zur Laser-Strahlquelle einen ersten Kerndurchmesser von 300 µm aufweisen und die zweite Lichtleitfaser zur Prozessoptik einen zweiten Kerndurchmesser von 600 µm aufweisen. Ein Vorteil dieser Ausgestaltung kann darin bestehen, dass eine präzise Strahlführung des Laserlichts und eine einfache Koppelung ermöglicht werden kann. Die Kombination aus einer ersten Lichtleitfaser mit kleinerem Kemdurchmesser und einer zweiten Lichtleitfaser mit größerem Durchmesser kann die Weitergabe der Prozessstrahlung zum zweiten Faseranschluss erleichtern und/oder Feedback von der Prozessoptik erleichtern. Gemäß einem zweiten Beispiel kann die zweite Lichtleitfaser einen Kemdurchmesser von 220 µm aufweisen und die erste Lichtleitfaser einen Kemdurchmesser von 200 µm aufweisen. Die Kombination aus einer ersten Lichtleitfaser mit einer zweiten Lichtleitfaser mit größerem Kerndurchmesser kann in der vorgeschlagenen Pyrometervorrichtung vorteilhaft sein, da sich eine Strahlqualität beim Umkoppeln bzw. bei Weitergabe der Prozesslaserstrahlung vom ersten Faseranschluss and den zweiten Faseranschluss durch etwaige Abbildungsfehler oder Justage-Abweichungen ggf. verschlechtert. Die vorgeschlagene Kombination kann die Montage und Justage erleichtern und eine etwaige Verschlechterung der Strahlqualität auffangen.

Alternativ oder zusätzlich kann die zweite Lichtleitfaser einen größeres Strahlparameterprodukt, SPP, als die erste Lichtleitfaser aufweisen. Das Strahlparameterprodukt kann als Maß für Strahlungsgüte angesehen werden. Es ist proportional zum Strahldurchmesser und dessen Divergenz. Die Wahl einer zweiten Lichtleitfaser mit größerem SPP erleichtert den Übergang bzw. die Weiterleitung der Prozesslaserstrahlung von der ersten zur zweiten Lichtleitfaser, da sich das SPP durch Abbildung bzw. Abbildungsfehler etc. verschlechtern kann. Vorteilhaft wird eine zweite Lichtleitfaser mit größerem Kemdurchmesser und/oder größerer nummerischer Apertur, NA, eingesetzt, d.h. eine zweite Lichtleitfaser mit größerem SPP. Gegenüber anderen Lösungen wie beispielsweise dem Einsatz einer Lochblende besteht ein Vorteil dieses Ansatzes darin, dass die Effizienz der Strahlweiterleitung nicht durch eine Blende vermindert wird und eine Blende im spezifischen Anwendungsfalls des Laserkunststoffschweißen voraussichtlich gekühlt werden müsste.

Die Pyrometervorrichtung kann eine Leistungsmesseinrichtung zum Messen einer über den ersten Faseranschluss empfangenen Laserleistung der Prozesslaserstrahlung aufweisen. Ein Vorteil dieser Lösung besteht in einem Synergieeffekt, da Leistungsmesseinrichtung und Pyrometer zusammen in einem Arbeitsgang nachrüstbar sind. Alternativ oder zusätzlich kann die Pyrometervorrichtung eine (Pointer-)Lichtquelle aufweisen und dazu eingerichtet sein, Licht von der Lichtquelle, insbesondere sichtbares Licht, über den zweiten Faseranschluss auszugeben. Ein Vorteil dieser Lösung besteht darin, dass keine Pointerlichtquelle in der Prozessoptik oder in der Laser-Strahlquelle erforderlich ist. Die Prozessoptik kann damit kostengünstiger hergestellt werden. Dies ist insbesondere dann vorteilhaft, wenn verschiedene auswechselbare Prozessoptiken zum Einsatz kommen sollen. Ein weiterer Vorteil kann darin bestehen, dass auch verschiedene Laser-Strahlquellen für die Prozesslaserstrahlung zum Einsatz kommen können und auf eine Pointerlichtquelle in der Laser-Strahlquelle, welche über den ersten Faseranschluss angeschlossen wird, verzichtet werden kann. Auch für die Strahlführung in der Pyrometervorrichtung kann sich ein Vorteil dahingehend ergeben, dass nur die Prozesslaserstrahlung vom ersten Faseranschluss an den zweiten Faseranschluss weitergeleitet werden muss, jedoch nicht zusätzlich eine davon abweichende optische Wellenlänge für eine in der Laser-Strahlquelle enthaltene Pointerlichtquelle. Dies ist besonders deswegen von Bedeutung, da die sich die Wellenlänge der Pointerlichtquelle (Wellenlänge im sichtbaren Spektralbereich) und die Wellenlänge der Prozesslaserstrahlung (üblicherweise Laserstrahlung im infraroten Spektralbereich) unterscheiden.

Es versteht sich, dass die Pyrometervorrichtung eine Kommunikationsschnittstelle zum Bereitstellen von Messdaten des Strahlungstemperatursensors und/oder der Leistungsmesseinrichtung aufweisen kann. Beispielsweise kann eine Datenverbindung der Pyrometervorrichtung zu weiteren Bestandteilen einer Produktionsanlage oder eines Systems zum Laserkunststoffschweißen bestehen. Daten der Pyrometervorrichtung können zu Dokumentationszwecken gespeichert werden oder zur (online) Prozesssteuerung eingesetzt werden. Beispielsweise kann eine Laserleistung oder Vorschubgeschwindigkeit des Werkstücks oder Prozesskopfs basierend auf den Messdaten des Temperatursensors geregelt werden. Ein Vorteil der vorgeschlagenen Pyrometervorrichtung kann insbesondere darin bestehen, dass auch eine Bestandsanlage nachträglich um eine Messdatenerfassung mit einem Strahlungstemperatursensoren durch die Pyrometervorrichtung ergänzt werden kann.

In dem System zum Laserkunststoffschweißen kann die Laser-Strahlquelle beabstandet von der Pyrometervorrichtung angeordnet sein. Ebenso kann die Prozessoptik beabstandet von der Pyrometervorrichtung angeordnet sein. Die Laser-Strahlquelle kann über eine erste Lichtleitfaser mit dem ersten Faseranschluss der Pyrometervorrichtung verbunden sein. Die Prozessoptik kann über eine zweite Lichtleitfaser mit dem zweiten Faseranschluss der Pyrometervorrichtung verbunden sein. Die Laser-Strahlquelle kann ein fasergekoppelter Diodenlaser oder ein Faserlaser sein.

Ein Vorteil der vorgeschlagenen Lösung kann insbesondere darin bestehen, dass keine nennenswerten Anpassungen der Prozessoptik vorgenommen werden müssen. Bestehende Prozessoptiken können eingesetzt und nachträglich aufgewertet werden.

Die vorstehend für den ersten Aspekt der Erfindung ausführlich beschriebenen Vorteile gelten für die weiteren Aspekte der Erfindung entsprechend.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Beispielhafte Ausführungsformen der Erfindung sind in nachfolgenden Zeichnungen dargestellt und werden in der nachfolgenden Beschreibung näher erläutert. Es zeigen:
- Fig. 1: eine schematische Darstellung eines herkömmlichen Systems zum Laserkunststoffschweißen;
- Fig. 2: eine schematische Darstellung eines Systems zum Laserkunststoffschweißen mit einer fasergekoppelten Pyrometervorrichtung;
- Fig. 3: eine perspektivische Ansicht eines ersten Ausführungsbeispiels einer Pyrometervorrichtung;
- Fig. 4: eine Draufsicht der Pyrometervorrichtung aus Fig. 3;
- Fig. 5: eine perspektivische Ansicht eines zweiten Ausführungsbeispiels einer Pyrometervorrichtung;
- Fig. 6: eine Draufsicht der Pyrometervorrichtung aus Fig. 5.

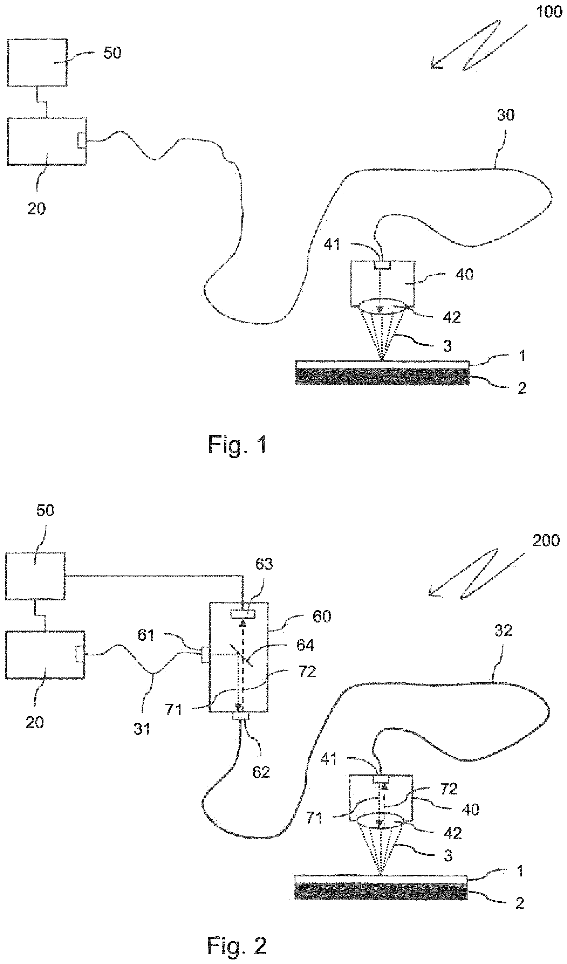

Fig. 1 zeigt eine schematische Darstellung eines herkömmlichen Systems 100 zum Laserkunststoffschweißen. In dem gezeigten Beispiel werden ein transparenter Fügepartner 1 und ein absorbierender Fügepartner 2 mittels eines Prozess-Laserstrahls 3 verschweißt. Der Laserstrahl 3 durchdringt den transparenten Kunststoff 1 und trifft auf den absorbierenden Kunststoff 2. Dort wird die Energie der Strahlung in Wärme umgewandelt und der Kunststoff schmilzt. Bei Kontakt mit dem transparenten Kunststoff 1 schmilzt dieser ebenfalls und verbindet sich mit dem absorbierenden Kunststoff 2. Sobald beide Kunststoffe erkaltet sind, entsteht eine stoffschlüssige Verbindung.

Das herkömmliche System 100 weist eine Laser-Strahlquelle 20 auf, welche über eine Lichtleitfaser 30 mit einem Prozesskopf 40 verbunden ist. Die verwendete Laser-Strahlquelle 20 kann beispielsweise ein fasergekoppelter Diodenlaser oder ein Faserlaser sein. Der Prozesskopf 40 weist einen Faseranschluss 41 für die Lichtleitfaser 30 auf. Der Prozesskopf 40 kann ferner ein oder mehrere strahlführende Elemente 42, wie Linsen, DOEs (diffraktive optische Elemente), etc., aufweisen, um die Laserstrahlung dem Werkstück mit den beiden Fügepartnern 1 ,2 zuzuführen. Das System kann ferner eine Steuerung 50 zur Steuerung der Laser-Strahlquelle 20 aufweisen. Beispielsweise kann eine Leistung der Laser-Strahlquelle 20 eingestellt werden.

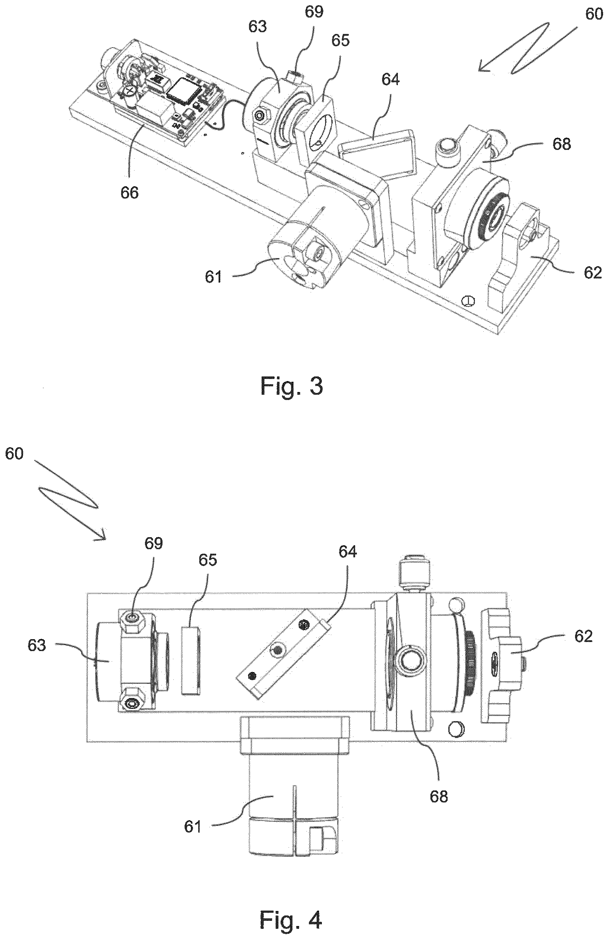

Fig. 2 zeigt eine schematische Darstellung eines System 200 zum Laserkunststoffschweißen, welches zusätzlich eine fasergekoppelte Pyrometervorrichtung 60 zur Temperaturbestimmung beim Laserkunststoffschweißen aufweist. Die Pyrometervorrichtung 60 weist einen ersten Faseranschluss 61 für eine erste Lichtleitfaser 31 auf. Die erste Lichtleitfaser 31 verbindet die Laser-Strahlquelle 20 mit der Pyrometervorrichtung 60. Die Pyrometervorrichtung 60 weist ferner einen zweiten Faseranschluss 62 für eine zweite Lichtleitfaser 32 auf. Die zweite Lichtleitfaser 32 verbindet die Pyrometervorrichtung 60 mit dem Prozesskopf 40. Bei dem Prozesskopf 40 kann es sich um einen herkömmlichen Prozesskopf handeln, insbesondere um einen Prozesskopf ohne integrierte Pyrometervorrichtung. Weitere Ausführungsbeispiele von Pyrometervorrichtungen 60 sind in Fig. 3 bis 6 im Detail gezeigt.

Die Pyrometervorrichtung 60 ist dazu eingerichtet, über den ersten Faseranschluss 61 von der externen Laser-Strahlquelle 20 bereitgestellte Prozesslaserstrahlung zu empfangen, an den zweiten Faseranschluss 62 weiterzuleiten und über den zweiten Faseranschluss 62 auszugeben. Die Prozesslaserstrahlung wird vom zweiten Faseranschluss 62 über die zweite Lichtleitfaser 32 zum Prozesskopf 40 geführt. Allerdings wir nicht nur die Prozesslaserstrahlung von der Pyrometervorrichtung 60 über die zweite Lichtleitfaser 32 zum Prozesskopf 40 geführt. Zusätzlich wird in Gegenrichtung vom Prozesskopf 40 empfangene Wärmestrahlung über die zweite Lichtleitfaser zur Pyrometervorrichtung 60 geführt. Die Prozesslaserstrahlung ist mit Bezugszeichen 71 bezeichnet. Die vom Werkstück ausgehende Wärmestrahlung ist mit Bezugszeichen 72 bezeichnet. Die Pyrometereinrichtung 60 ist dazu eingerichtet, über den zweiten Faseranschluss 62 von der externen Prozessoptik 40 empfangene Wärmestrahlung 72 an einen Strahlungstemperatursensor 63 der Pyrometervorrichtung weiterzuleiten. Der Strahlungstemperatursensor 63 kann auch als Pyrometer bezeichnet werden.

Die Pyrometervorrichtung 60 kann beispielsweise einen teildurchlässigen Spiegel 64 aufweisen, welcher derart angeordnet und dazu eingerichtet ist, (a) die Laser-Prozessstrahlung vom ersten Faseranschluss an den zweiten Faseranschluss weiterzuleiten und (b) die über den zweiten Faseranschluss empfangene Wärmestrahlung an den Strahlungstemperatursensor weiterzuleiten, wie in Fig. 2 dargestellt. In dem gezeigten Beispiel wird die Prozesslaserstrahlung 71 umgelenkt. Der erste Faseranschluss, der zweite Faseranschluss, der teildurchlässige Spiegel und der Strahlungstemperatursensor sind im gezeigten Beispiel derart angeordnet und dazu eingerichtet, dass der teildurchlässige Spiegel 64 die Laser-Prozessstrahlung reflektiert und vom ersten Faseranschluss 61 an den zweiten Faseranschluss 62 umlenkt; und der teildurchlässige Spiegel 64 die über den zweiten Faseranschluss empfangene Wärmestrahlung passieren lässt und an den Strahlungstemperatursensor 63 weiterleitet.

Die vorgeschlagene Pyrometervorrichtung kann vorzugsweise auch nachträglich in eine Faserstrecke zwischen einer Laser-Strahlquelle 20 und einem Prozesskopf 40 eingefügt werden, um ein System 200 zum Laserkunststoffschweißen nachträglich aufzuwerten. Ein weiterer Vorteil kann darin bestehen, dass je nach den vorliegenden Anforderungen verschiedene Prozessköpfe 40 und/oder verschiedene Laser-Strahlquellen 20 eingesetzt werden können. Die Pyrometervorrichtung 60 kann beabstandet vom Prozesskopf 40 angeordnet sein. Dadurch können kleinere und leichtere Prozessköpfe eingesetzt werden. Weitere Vorteile wurden bereits einleitend beschrieben.

Wie in Fig. 2 durch unterschiedliche Linienstärken der ersten Lichtleitfaser 31 und der zweiten Lichtleitfaser 32 skizziert, weist die zweite Lichtleitfaser 32 vorzugsweise einen größeren Kerndurchmesser als die erste Lichtleitfaser 31 auf. Alternativ oder zusätzlich kann die zweite Lichtleitfaser 32 ein größeres Strahlparameterprodukt, SPP, als die erste Lichtleitfaser 31 aufweisen. Beispielsweise kann die erste Lichtleitfaser 31 zur Laser-Strahlquelle 20 einen ersten Kerndurchmesser von 300 µm aufweisen und die zweite Lichtleitfaser 32 zur Prozessoptik 40 einen zweiten Kerndurchmesser von 600 µm aufweisen. Gemäß einem zweiten Beispiel kann die zweite Lichtleitfaser 32 einen Kerndurchmesser von 220 µm aufweisen und die erste Lichtleitfaser 31 einen Kerndurchmesser von 200 µm aufweisen. Diese Ausgestaltung erleichtert die Übergabe von der ersten Lichtleitfaser 31 zur zweiten Lichtleitfaser 32 in der Pyrometervorrichtung 60.

Das System 200 zum Laserkunststoffschweißen 60 kann ebenfalls eine Steuerung 50 zur Steuerung der Laser-Strahlquelle 20 aufweisen. Die Steuerung 50 kann ferner mit dem Strahlungstemperatursensor 63 verbunden sein, beispielsweise über eine Kommunikationsschnittstelle, mit welcher Messdaten des Strahlungstemperatursensors an die Steuerung übergeben werden. Somit kann eine Prozessüberwachung des Schweißvorgangs vorgenommen werden. Insbesondere kann die Laserleistung der Laser-Strahlquelle 20 derart geregelt werden, dass eine gewünschte Temperatur an der Schweißstelle erreicht wird. Alternativ oder zusätzlich kann eine Vorschubgeschwindigkeit von Werkstück und Prozesskopf 40 relativ zueinander basierend auf der vom Strahlungstemperatursensor 63 gemessenen Temperatur geregelt werden.

Fig. 3 und Fig. 4 zeigen eine perspektivische Ansicht und eine Draufsicht eines ersten Ausführungsbeispiels einer Pyrometervorrichtung 60. Die Pyrometervorrichtung 60 weist erneut den ersten Faseranschluss 61 für die erste Lichtleitfaser 31, den zweiten Faseranschluss 62 für die zweite Lichtleitfaser 32 und den Strahlungstemperatursensor 63 auf. Der erste Faseranschluss 61 kann beispielsweise ein IPG-Kollimator-Anschluss sein. Der zweite Faseranschluss 62 kann beispielsweise ein F-SMA-Anschluss nach IEC 61754-22 sein. Es können jedoch auch anderen Anschlüsse verwendet werden. Ein halbdurchlässiger Spiegel 64 leitet die über den ersten Faseranschluss 61 empfangene Prozesslaserstrahlung an den zweiten Faseranschluss 62 weiter. Der halbdurchlässige Spiegel 64 ist durchlässig für über den zweiten Faseranschluss 62 empfangene Wärmestrahlung und leitet diese an den Strahlungstemperatursensor 63 weiter.

Optional kann ein Filter 65 vor dem Strahlungstemperatursensor 63 vorgesehen sein. Der Filter 65 ist dazu eingerichtet die Prozesslaserstrahlung zu blockieren bzw. abzuschwächen. Somit wird der Strahlungstemperatursensor 63 vor der Prozesslaserstrahlung geschützt und kann ein besseres Messergebnis bei der Temperaturmessung der Schweißstelle erreicht werden.

In Fig. 3 ist zusätzlich ein Elektronikmodul in Form einer Platine 66 abgebildet, welche mit dem Strahlungstemperatursensor 63 verbunden ist. Hierbei kann es sich um Bauelementen für den Betrieb des Strahlungstemperatursensors 63 und/oder um eine Kommunikationsschnittstelle zur Verbindung mit der Steuerung 50 handeln, wie in Fig. 2 gezeigt.

Wie in Fig. 3 und 4 gezeigt kann die Pyrometervorrichtung 60 eine erste Justageeinrichtung 68 aufweisen, die dazu eingerichtet ist, eine optische Kopplung zwischen dem ersten Faseranschluss 61 und dem zweiten Faseranschluss 62 zu justieren. Beispielsweise kann eine Justage in einer x-y-Ebene orthogonal zu einer Hauptstrahlrichtung, eine Strahlablenkung und/oder eine Fokussierung der Prozesslaserstrahlung vorgenommen werden, vorzugsweise derart, dass die Prozesslaserstrahlung mit möglichst geringen Verlusten vom ersten Faseranschluss 61 and den zweiten Faseranschluss 62 übergeben wird. Grundsätzlich kann die Pyrometervorrichtung 60 die erste Lichtleitfaser 31, welche mit dem ersten Faseranschluss 61 verbunden ist, und/oder die zweite Lichtleitfaser 21, welche mit dem zweiten Faseranschluss 62 verbunden ist, aufweisen. Die erste und/oder zweite Lichtleitfaser können also bereits Teil der Pyrometervorrichtung 60 sein. In diesem Fall kann eine Justage bereits bei Herstellung der Pyrometervorrichtung 60 erfolgen. Dies Erleichtert die Montage beim Kunden.

Die Pyrometervorrichtung kann alternativ oder zusätzlich eine zweite Justageeinrichtung 69 aufweisen, die dazu eingerichtet ist, eine optische Kopplung zwischen dem zweiten Faseranschluss 62 und dem Strahlungstemperatursensor 63 zu justieren. Im vorliegenden Beispiel kann die zweite Justageeinrichtung 69 in einer Halterung für den Strahlungstemperatursensor 63 integriert sein. Es ist jedoch auch denkbar eine separate Justageeinrichtung 69 vorzusehen.

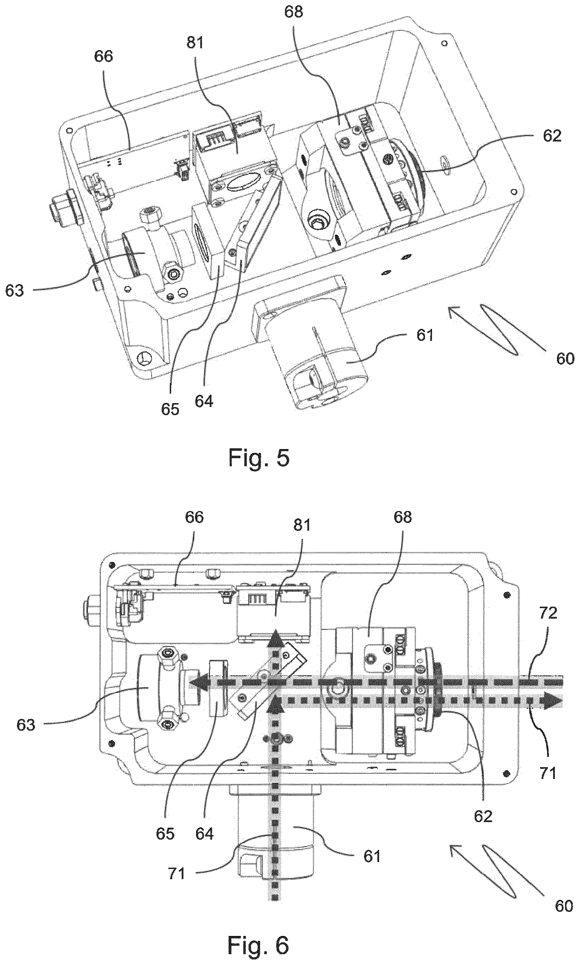

Fig. 5 und Fig. 6 zeigen eine perspektivische Ansicht und eine Draufsicht eines weiteren Ausführungsbeispiels einer Pyrometervorrichtung 60. Die Pyrometervorrichtung kann ein Gehäuse aufweisen, in welchem die optischen Komponenten der Pyrometervorrichtung angeordnet sind. Das gezeigte Ausführungsbeispiel ermöglicht einen kompakten Aufbau und kann auf einfache Weise nachträglich in eine Faserstrecke zwischen Laser-Strahlquelle 20 und Prozessoptik 40 eingefügt werden. Die Strahlengänge für die Prozesslaserstrahlung 71 und die Wärmestrahlung 72 sind in der Draufsicht in Fig. 6 hervorgehoben.

Wie in Fig. 5 und 6 gezeigt, kann die Pyrometervorrichtung ferner eine Leistungsmesseinrichtung 81 zum Messen einer über den ersten Faseranschluss empfangenen Laserleistung der Prozesslaserstrahlung aufweisen. Der teildurchlässige Spiegel leitet den größten Teil der über den ersten Faseranschluss 61 empfangenen Prozesslaserstrahlung 71 an den zweiten Faseranschluss 62 weiter. Allerdings wird ein kleinerer Teil nicht reflektiert und gelangt zur Leistungsmesseinrichtung 81. Aufgrund der Ablenkung durch den teildurchlässigen Spiegel 64 kann optional auf einen optischen Dämpfer bzw. Neutraldichtefilter vor der Leistungsmesseinrichtung 81 verzichtet werden. Dies kann die Herstellungskosten reduzieren und den Aufbau erleichtern.

Optional kann die Pyrometervorrichtung eine integrierte Lichtquelle, auch als Pointer-Lichtquelle bezeichnet, aufweisen (nicht gezeigt), die dazu eingerichtet ist, Licht von der Lichtquelle, insbesondere sichtbares Licht, über den zweiten Faseranschluss auszugeben. Das Licht der Pointer-Lichtquelle kann beispielsweise über einen weiteren teildurchlässigen Spiegel in den Strahlengang eingekoppelt werden. Das Licht der Pointerlichtquelle wird ebenfalls über die zweite Lichtleitfaser und die Prozessoptik zum Werkstück geführt und kann einem Benutzer eine optische Markierung für den durch die Prozesslaserstrahlung erhitzten Bereich dienen. Dies erleichtert die Positionierung von Prozesskopf und Werkstück.

Zusammenfassend kann mit den hierin vorgeschlagenen Lösungen ein verbessertes System zum Laserkunststoffschweißen und eine Pyrometervorrichtung zur Temperaturbestimmung beim Laserkunststoffschweißen und bereitgestellt werden. Insbesondere können auch Bestandsanlagen nachträglich aufgewertet werden. Zudem können Gewicht und Größe eines Prozesskopfs geringgehalten werden.

## Patentansprüche

1. Pyrometervorrichtung (60) zur Temperaturbestimmung beim Laserkunststoffschweißen, wobei die Pyrometervorrichtung folgendes aufweist:
- einen ersten Faseranschluss (61) für eine erste Lichtleitfaser (31);
- einen zweiten Faseranschluss (62) für eine zweite Lichtleitfaser (32); und
- einen Strahlungstemperatursensor (63);
wobei die Pyrometervorrichtung (60) dazu eingerichtet ist, über den ersten Faseranschluss (61) empfangene Prozesslaserstrahlung (71) an den zweiten Faseranschluss (62) weiterzuleiten und über den zweiten Faseranschluss (62) auszugeben;
wobei die Pyrometervorrichtung (60) dazu eingerichtet ist, über den zweiten Faseranschluss (62) empfangene Wärmestrahlung (72) an den Strahlungstemperatursensor (63) weiterzuleiten.

2. Pyrometervorrichtung (60) nach Anspruch 1, wobei die Pyrometervorrichtung dazu eingerichtet ist, über den ersten Faseranschluss (61) von einer externen Strahlquelle (20) bereitgestellte Prozesslaserstrahlung (71) zu empfangen, an den zweiten Faseranschluss (62) weiterzuleiten und über den zweiten Faseranschluss (62) auszugeben.

3. Pyrometervorrichtung (60) nach einem der vorhergehenden Ansprüche, wobei die Pyrometervorrichtung dazu eingerichtet ist, über den zweiten Faseranschluss (62) von einer externen Prozessoptik (40) empfangene Wärmestrahlung an den Strahlungstemperatursensor (63) weiterzuleiten.

4. Pyrometervorrichtung (60) nach einem der vorhergehenden Ansprüche, wobei die Pyrometervorrichtung einen teildurchlässigen Spiegel (64) aufweist, welcher derart angeordnet und dazu eingerichtet ist, (a) die Laser-Prozessstrahlung (71) vom ersten Faseranschluss (61) an den zweiten Faseranschluss (62) weiterzuleiten und (b) die über den zweiten Faseranschluss (62) empfangene Wärmestrahlung (72) an den Strahlungstemperatursensor (63) weiterzuleiten.

5. Pyrometervorrichtung (60) nach Anspruch 4, wobei der erste Faseranschluss (31), der zweite Faseranschluss (32), der teildurchlässige Spiegel (64) und der Strahlungstemperatursensor (63) derart angeordnet und dazu eingerichtet sind, dass
- der teildurchlässige Spiegel (64) die Laser-Prozessstrahlung (71) reflektiert und vom ersten Faseranschluss (61) an den zweiten Faseranschluss (62) umlenkt; und
- der teildurchlässige Spiegel (64) die über den zweiten Faseranschluss (62) empfangene Wärmestrahlung (72) passieren lässt und an den Strahlungstemperatursensor (63) weiterleitet.

6. Pyrometervorrichtung (60) nach einem der vorhergehenden Ansprüche, wobei die Pyrometervorrichtung ferner eine erste Justageeinrichtung (68) aufweist, die dazu eingerichtet ist, eine optische Kopplung zwischen dem ersten Faseranschluss (61) und dem zweiten Faseranschluss (62) zu justieren.

7. Pyrometervorrichtung (60) nach einem der vorhergehenden Ansprüche, wobei die Pyrometervorrichtung ferner eine zweite Justageeinrichtung (69) aufweist, die dazu eingerichtet ist, eine optische Kopplung zwischen dem zweiten Faseranschluss (62) und dem Strahlungstemperatursensor (63) zu justieren.

8. Pyrometervorrichtung (60) nach einem der vorhergehenden Ansprüche, wobei die Prozesslaserstrahlung (71) eine Wellenlänge im Bereich von 900 nm bis 1.100 nm aufweist und/oder wobei die Wärmestrahlung (72) eine Wellenlänge im Bereich von 1.700 nm bis 2.300 nm aufweist; und/oder wobei die Prozesslaserstrahlung (71) inmitten oder am Rand eines auswertbaren Spektrums des Strahlungstemperatursensors (63) liegt.

9. Pyrometervorrichtung (60) nach einem der vorhergehenden Ansprüche, wobei vor dem Strahlungstemperatursensor (63) ein spektraler Filter (65) angeordnet ist, der dazu eingerichtet ist, die Prozesslaserstrahlung (71) zu blocken.

10. Pyrometervorrichtung (60) nach einem der vorhergehenden Ansprüche, wobei die Pyrometervorrichtung ferner
- eine erste Lichtleitfaser (31) aufweist, welche mit dem ersten Faseranschluss (61) verbunden ist; und/oder
- eine zweite Lichtleitfaser (32) aufweist, welche mit dem zweiten Faseranschluss (62) verbunden ist.

11. Pyrometervorrichtung (60) nach Anspruch 10, wobei die zweite Lichtleitfaser (32) einen größeren Kemdurchmesser als die erste Lichtleitfaser (31) aufweist.

12. Pyrometervorrichtung (60) nach Anspruch 10 oder 11, wobei die zweite Lichtleitfaser(32) ein größeres Strahlparameterprodukt, SPP, als die erste Lichtleitfaser (31) aufweist.

13. Pyrometervorrichtung (60) nach einem der vorhergehenden Ansprüche, wobei die Pyrometervorrichtung ferner (a) eine Leistungsmesseinrichtung (81) zum Messen einer über den ersten Faseranschluss (61) empfangenen Laserleistung der Prozesslaserstrahlung (71) aufweist; und/oder (b) eine Lichtquelle aufweist und dazu eingerichtet ist, Licht von der Lichtquelle, insbesondere sichtbares Licht, über den zweiten Faseranschluss (62) auszugeben.

14. System (200) zum Laserkunststoffschweißen, wobei das System folgendes aufweist:
- eine Laser-Strahlquelle (20) zum Laserkunststoffschweißen;
- eine Prozessoptik (40) zum Laserkunststoffschweißen;
- eine Pyrometervorrichtung (60) zur Temperaturbestimmung beim Laserkunststoffschweißen nach einem der vorhergehenden Ansprüche;
wobei die Laser-Strahlquelle (20) über eine erste Lichtleitfaser (31) mit dem ersten Faseranschluss (61) der Pyrometervorrichtung verbunden ist; und
wobei die Prozessoptik (40) über eine zweite Lichtleitfaser (32) mit dem zweiten Faseranschluss (62) der Pyrometervorrichtung verbunden ist.

15. System (200) zum Laserkunststoffschweißen nach Anspruch 14, wobei die Laser-Strahlquelle (20) ein fasergekoppelter Diodenlaser oder ein Faserlaser ist.

## Geänderte Patentansprüche

### Geänderte Patentansprüche gemäss Regel 137(2) EPÜ.

1. Pyrometervorrichtung (60) zur Temperaturbestimmung beim Laserkunststoffschweißen, wobei die Pyrometervorrichtung folgendes aufweist:
- einen ersten Faseranschluss (61) für eine erste Lichtleitfaser (31); und
- einen Strahlungstemperatursensor (63);
**dadurch gekennzeichnet, dass** die Pyrometervorrichtung (60) einen zweiten Faseranschluss (62) für eine zweite Lichtleitfaser (32) aufweist;
wobei die Pyrometervorrichtung (60) dazu eingerichtet ist, über den ersten Faseranschluss (61) empfangene Prozesslaserstrahlung (71) an den zweiten Faseranschluss (62) weiterzuleiten und über den zweiten Faseranschluss (62) auszugeben;
wobei die Pyrometervorrichtung (60) dazu eingerichtet ist, über den zweiten Faseranschluss (62) empfangene Wärmestrahlung (72) an den Strahlungstemperatursensor (63) weiterzuleiten.

2. Pyrometervorrichtung (60) nach Anspruch 1, wobei die Pyrometervorrichtung dazu eingerichtet ist, über den ersten Faseranschluss (61) von einer externen Strahlquelle (20) bereitgestellte Prozesslaserstrahlung (71) zu empfangen, an den zweiten Faseranschluss (62) weiterzuleiten und über den zweiten Faseranschluss (62) auszugeben.

3. Pyrometervorrichtung (60) nach einem der vorhergehenden Ansprüche, wobei die Pyrometervorrichtung dazu eingerichtet ist, über den zweiten Faseranschluss (62) von einer externen Prozessoptik (40) empfangene Wärmestrahlung an den Strahlungstemperatursensor (63) weiterzuleiten.

4. Pyrometervorrichtung (60) nach einem der vorhergehenden Ansprüche, wobei die Pyrometervorrichtung einen teildurchlässigen Spiegel (64) aufweist, welcher derart angeordnet und dazu eingerichtet ist, (a) die Laser-Prozessstrahlung (71) vom ersten Faseranschluss (61) an den zweiten Faseranschluss (62) weiterzuleiten und (b) die über den zweiten Faseranschluss (62) empfangene Wärmestrahlung (72) an den Strahlungstemperatursensor (63) weiterzuleiten.

5. Pyrometervorrichtung (60) nach Anspruch 4, wobei der erste Faseranschluss (31), der zweite Faseranschluss (32), der teildurchlässige Spiegel (64) und der Strahlungstemperatursensor (63) derart angeordnet und dazu eingerichtet sind, dass
- der teildurchlässige Spiegel (64) die Laser-Prozessstrahlung (71) reflektiert und vom ersten Faseranschluss (61) an den zweiten Faseranschluss (62) umlenkt; und
- der teildurchlässige Spiegel (64) die über den zweiten Faseranschluss (62) empfangene Wärmestrahlung (72) passieren lässt und an den Strahlungstemperatursensor (63) weiterleitet.

6. Pyrometervorrichtung (60) nach einem der vorhergehenden Ansprüche, wobei die Pyrometervorrichtung ferner eine erste Justageeinrichtung (68) aufweist, die dazu eingerichtet ist, eine optische Kopplung zwischen dem ersten Faseranschluss (61) und dem zweiten Faseranschluss (62) zu justieren.

7. Pyrometervorrichtung (60) nach einem der vorhergehenden Ansprüche, wobei die Pyrometervorrichtung ferner eine zweite Justageeinrichtung (69) aufweist, die dazu eingerichtet ist, eine optische Kopplung zwischen dem zweiten Faseranschluss (62) und dem Strahlungstemperatursensor (63) zu justieren.

8. Pyrometervorrichtung (60) nach einem der vorhergehenden Ansprüche, wobei die Prozesslaserstrahlung (71) eine Wellenlänge im Bereich von 900 nm bis 1.100 nm aufweist und/oder wobei die Wärmestrahlung (72) eine Wellenlänge im Bereich von 1.700 nm bis 2.300 nm aufweist; und/oder wobei die Prozesslaserstrahlung (71) inmitten oder am Rand eines auswertbaren Spektrums des Strahlungstemperatursensors (63) liegt.

9. Pyrometervorrichtung (60) nach einem der vorhergehenden Ansprüche, wobei vor dem Strahlungstemperatursensor (63) ein spektraler Filter (65) angeordnet ist, der dazu eingerichtet ist, die Prozesslaserstrahlung (71) zu blocken.

10. Pyrometervorrichtung (60) nach einem der vorhergehenden Ansprüche, wobei die Pyrometervorrichtung ferner
- eine erste Lichtleitfaser (31) aufweist, welche mit dem ersten Faseranschluss (61) verbunden ist; und/oder
- eine zweite Lichtleitfaser (32) aufweist, welche mit dem zweiten Faseranschluss (62) verbunden ist.

11. Pyrometervorrichtung (60) nach Anspruch 10, wobei die zweite Lichtleitfaser (32) einen größeren Kerndurchmesser als die erste Lichtleitfaser (31) aufweist.

12. Pyrometervorrichtung (60) nach Anspruch 10 oder 11, wobei die zweite Lichtleitfaser (32) ein größeres Strahlparameterprodukt, SPP, als die erste Lichtleitfaser (31) aufweist.

13. Pyrometervorrichtung (60) nach einem der vorhergehenden Ansprüche, wobei die Pyrometervorrichtung ferner (a) eine Leistungsmesseinrichtung (81) zum Messen einer über den ersten Faseranschluss (61) empfangenen Laserleistung der Prozesslaserstrahlung (71) aufweist; und/oder (b) eine Lichtquelle aufweist und dazu eingerichtet ist, Licht von der Lichtquelle, insbesondere sichtbares Licht, über den zweiten Faseranschluss (62) auszugeben.

14. System (200) zum Laserkunststoffschweißen, wobei das System folgendes aufweist:
- eine Laser-Strahlquelle (20) zum Laserkunststoffschweißen;
- eine Prozessoptik (40) zum Laserkunststoffschweißen;
- eine Pyrometervorrichtung (60) zur Temperaturbestimmung beim Laserkunststoffschweißen nach einem der vorhergehenden Ansprüche;
wobei die Laser-Strahlquelle (20) über eine erste Lichtleitfaser (31) mit dem ersten Faseranschluss (61) der Pyrometervorrichtung verbunden ist; und
wobei die Prozessoptik (40) über eine zweite Lichtleitfaser (32) mit dem zweiten Faseranschluss (62) der Pyrometervorrichtung verbunden ist.

15. System (200) zum Laserkunststoffschweißen nach Anspruch 14, wobei die Laser-Strahlquelle (20) ein fasergekoppelter Diodenlaser oder ein Faserlaser ist.
